Europäisches Patentamt

European Patent Office

Office européen des brevets

(19)

(11) Publication number: **0 222 394**
A2

(12)

# EUROPEAN PATENT APPLICATION

(21) Application number: 86115723.8

(22) Date of filing: 12.11.86

(51) Int. Cl.⁴: **H 01 L 41/08**

(30) Priority: 13.11.85 JP 254111/85
23.12.85 JP 289903/85
17.02.86 JP 32331/86
04.04.86 JP 78521/86

(43) Date of publication of application:
20.05.87 Bulletin 87/21

(84) Designated Contracting States:
DE FR GB

(71) Applicant: Matsushita Electric Industrial Co., Ltd.
1006, Oaza Kadoma
Kadoma-shi Osaka-fu, 571(JP)

(72) Inventor: Sumihara, Masanori
30-23, Miyukihigashi-machi
Neyagawa City 572(JP)

(72) Inventor: Imasaka, Yoshinobu
13-1-104, uryudou 1-chome
Higashiosaka City, 578(JP)

(72) Inventor: Tokushima, Akira
97-6, Daigo Oji-cho
Fushimi-ku Kyoto City, 601-13(JP)

(72) Inventor: Yoneno, Hiroshi
452-116, Oaza-Yuzaki Kawanishi-cho
Shiki-gun Nara Pref.636-03(JP)

(74) Representative: Dr. Elisabeth Jung Dr. Jürgen
Schirdewahn Dipl.-Ing. Claus Gernhardt
P.O. Box 40 14 68 Clemensstrasse 30
D-8000 München 40(DE)

(54) Ultrasonic motor.

(57) A friction material containing at least a rubber-like elastic
body is provided between a vibrating stator (2) provided with
a piezoelectric element (4) for producing travelling wave and
a rotor of an ultrasonic motor. Noise is suppressed and motor
capabilities such as driving torque and wear are fairly im-
proved.

FIG.1

## TITLE OF THE INVENTION

Ultrasonic motor

## FIELD OF THE INVENTION AND RELATED ART STATEMENT

## 1. FIELD OF THE INVENTION

The present invention relates to a motor, and more particularly to an ultrasonic motor wherein driving force is given by ultrasonic vibration of piezoelectric element.

## 2. DESCRIPTION OF THE RELATED ART

Hitherto, ultrasonic motors are generally constituted by contacting a vibrating stator to an object to be driven (hereinafter referred to merely as object) with a certain pressure to each other, as shown in Japanese published unexamined patent application Sho 60-55866.

In such ultrasonic motors, the object is driven by frictional force produced by contact of the vibrating stator and the object. Therefore, the contact condition of the vibrating stator and the object becomes one important factor which determines capabilities of the ultrasonic motor such as static torque, energy conversion efficiency and lifetime thereof.

In the conventional ultrasonic motors, a friction material having large coefficient of friction which is generally called slider is provided between the vibrating stator and the object. However, detailed study

1

on effect and concrete composition of the slider have not been well known.

In the ultrasonic motor using the friction force produced by contact of the vibrating stator and the object with a certain pressure to each other, there is a problem that, when commercially available materials only having large coefficient of friction are used as the friction material, a wear of the friction material goes on, thereby causing a fluctuation of the contact condition of the friction material with the vibrating stator and the object. As a result, there is a problem that deterioration of the capabilities of the ultrasonic motor is caused. And furthermore, when the ultrasonic motor drives, considerable noise is produced by contacting of the vibrating stator to the object, and it becomes large disadvantage for practical use.

## OBJECT AND SUMMARY OF THE INVENTION

The present invention intends to solve such problems of the prior art, and to offer such an ultrasonic motor which does not cause deterioration of motor capabilities and nor produce large noise and furthermore have sufficient lifetime in practical use.

The ultrasonic motor in accordance with the present invention comprises a vibrating stator provided with a piezoelectric element for producing travelling wave, an object to be driven by driving force based on the

2

travelling wave, and a friction material containing at least rubber-like elastic body for transmitting the driving force from the vibrating stator to the object, the friction material being provided between the vibrating stator and the object in such a manner to give enough contact therebetween to transmit the driving force by friction force.

BRIEF DESCRIPTION OF THE DRAWINGS

FIG.1 is a sectional view showing a main part of the ultrasonic motor embodying the present invention.

FIG.2 and FIG.3 are sectional views showing a main part of the ultrasonic motors of other embodiments of the present invention.

FIG.4 is an exploded perspective view partially in cross section showing a main part of a disk-type ultrasonic motor embodying the present invention.

FIG.5 is an exploded perspective view partially in cross section showing a main part of a ring-type ultrasonic motor embodying the present invention.

DESCRIPTION OF THE PREFERRED EMBODIMENT

In the following, an ultrasonic motor embodying the present invention is elucidated referring to the drawings.

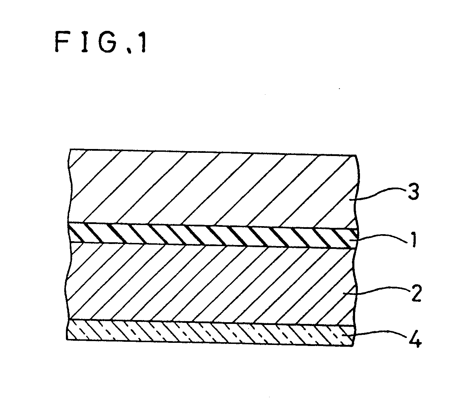

In FIG.1, a vibrating stator 2 is provided with a piezoelectric element 4 on it under surface. A friction material containing rubber-like elastic body 1 is provided

3

between the vibrating stator 2 and an object 3.

In the present embodiment, the friction material 1 is fixed to the bottom face of the object 3, and the object 3 is disposed on the vibrating stator 2 in a manner to fasten the friction material between the vibrating stator 2 and the object 3 with a pressure by a spring or a magnetic force.

However, manner of disposing the friction material 1 between the vibrating stator 2 and the object 3 is not limited to the above-mentioned method.

Stainless steel or iron steel is used as a material for the vibrating stator 2, but the material for the vibrating stator 2 is not limited to the above, and any materials which do not absorb the mechanical vibration of the piezoelectric element 4 and which can transmit the mechanical vibration to the object 3 can be used for the vibrating stator 2.

Next, the embodiment of the present invention is explained in detail with reference to the drawings.

A) [Embodiment using a rubber-like elastic body as the friction material]

Polyurethane resin, silicone resin, buthadiene synthetic rubber, olefinic synthetic rubber, fluoro rubber, polysulfide rubber, acrylic rubber, chlorinated rubber, chlorosulfonated polyethylene rubber, nitrile rubber or the like are preferable for the rubber-like

4

elastic body for the friction material of the present invention. However, usable friction materials are not limited to them. Moreover, the rubber-like elastic compositions made by adding inorganic or organic substance powder or fiber to the above-mentioned rubber-like elastic body can be used for the friction material.

The rubber-like elastic bodies are formed into sheet-shaped elastic body having a thickness of 0.2 mm by applying heat and pressure thereto.

The characteristics of the sheet-shaped elastic bodies are shown in Table 1.

The sheet-shaped elastic bodies are used as the friction material.

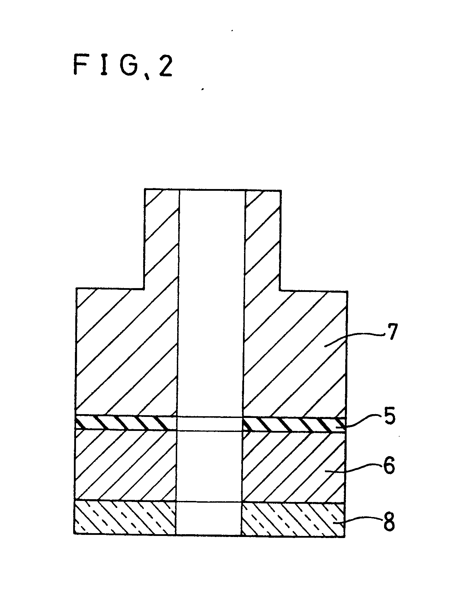

As shown in FIG.2, the ultrasonic motor of the present embodiment is provided with a friction materials 5 disposed between a vibrating stator 6 made of stainless steel and an object 7. The ultrasonic motor was driven, static torque and nonloading rotation number were measured, and whether noise was caused or not is observed. Measured data were shown in Table 2.

5

Table 1

| | Rubber-like elastic body material | Characteristics | | | |
|---|---|---|---|---|---|
| | | Hardness (Testing method) | Elongation (%) | Tensile strength (Kg/cm²) | Thickness (mm) |
| Example 1 | Polyurethane polymer (made by Takeda Chemical Industries, Ltd. Trade name Takenate L-2710) | 92 (SHORE -A) | 500 | 520 | 0.2 |
| Example 2 | Silicone resin (TC rubber made by Shin-Etsu Chemical Co., Ltd.) | 80 (JIS) | 150 | 105 | 0.3 |
| Example 3 | Fluoro rubber (DAI-EL Latex GL made by DAIKIN INDUSTRIES, LTD.) | 73 (IRHD) | 250 | 102 | 0.3 |
| Example 4 | Thermosetting poly-urethane (BANDEX made by DAINIPPON INK AND CHEMI-CALS, INC.) | 92 (JIS) | 520 | 160 | 0.3 |
| Example 5 | Buthadiene resin (JSR-RB rubber made by Japan Synthetic Rubber Co., Ltd.) | 90 (JIS) | 240 | 137 | 0.2 |
| Example 6 | Nitrile rubber (JSR-NR rubber made by Japan Synthetic Rubber Co., Ltd.) | 76 (JIS) | 450 | 195 | 0.2 |
| Example 7 | Olefinic rubber (JSR-IR rubber made by Japan Synthetic Rubber Co., Ltd.) | 72 (JIS) | 560 | 230 | 0.2 |

6

Table 2

| | Static torque (gf·cm) | Nonloaded rotation number (rpm) | Noise |
|---|---|---|---|
| Example 1 | 780 | 1050 | Nil |
| Example 2 | 750 | 890 | Nil |
| Example 3 | 700 | 840 | Nil |
| Example 4 | 800 | 1050 | Nil |
| Example 5 | 720 | 1100 | Nil |
| Example 6 | 910 | 980 | Nil |
| Example 7 | 890 | 950 | Nil |

As is clearly shown in Table 2, the ultrasonic motors using the above-mentioned sheet-shaped elastic body as the friction material showed splendid driving energy output, and both of the static torque and the nonloaded rotation number were large. Moreover, such a noise caused by frictional contact was not produced, and capabilities of the ultrasonic motor were stable in long time use.

On the other hand, in an ultrasonic motor as a comparison example provided with a friction material (thickness 1 mm, rockwell hardness M 105, elongation 3 %) made by forming a mixture of asbestos fiber and phenol resin into sheet-shape body with application of heat and pressure, the static torque and the nonloaded rotation number were 590 gf·cm and 720 rpm respectively, and the driving energy output was inferior to the ultrasonic motor

7

of the present invention. Moreover, undesirable frictional noise produced.

As explained above, the ultrasonic motors provided with the friction material comprising at least the rubber-like elastic materials of the present embodiment do not produced frictional noise, thereby enabling quiet rotation of the motor. And furthermore, the motor capabilities were improved, and large static torque and large rotation number were realized.

B)        [Embodiment using a composition made by combination of aromatic polyamide fiber cloth and the rubber-like elastic body as the friction material]

Though there is no particular limitation, polyurethane elastomer, fluoro rubber, rubber denatured phenol resin, flexibility-given bismaleimide-triazine resin or the like are preferable for the rubber-like elastic body.

The rubber-like elastic bodies shown in Table 3 were infiltrated into plane fabric cloth made of the aromatic polyamide fiber (Kevler, made by Du Pont Co. LTD.), and thereafter, it was formed into sheet-shaped body having 0.5 mm thickness with application of heat and pressure, thereby obtaining the sheet-shaped friction material. Next, as shown in FIG.1, the sheet-shaped friction material 1 was provided between the vibrating stator 2 provided with a piezoelectric element 4 and the

8

object 3, and in order to sufficiently contact the 0222394
friction material 1 to the vibrating stator 2 and the
object 3, a certain pressure was applied to them by a
spring (not shown in FIG.1). The ultrasonic motors
comprising the above-mentioned constitution were driven on
the condition that the load applied to the motor in an
opposite direction to a rotation direction was 500 gf·cm.
The coefficient of friction and wear amount after one
million times of rotation were measured, and whether
friction noise was produced or not was observed. The
results are shown in Table 4 below.

And furthermore, in the present embodiment,
though the plane fabric of the polyamide fiber was used as
the aromatic polyamide fiber cloth, usable cloth is not
limited to the above. Not only woven cloth such as
figured cloth or satin woven cloth, but also non-woven
cloth such as felt can be used.

Table 3

| | Rubber-like elastic body | Fiber content (Wt %) | Thickness (mm) |
|---|---|---|---|
| Example 8 | Polyurethane elastomer (made by Takeda Chemical Industries, Ltd. Trade name Takenate L-2760) | 62 | 0.5 |
| Example 9 | Fluoro rubber (DAI-EL Latex GL made by DAIKIN INDUSTRIES, LTD.) | 68 | 0.5 |
| Example 10 | Rubber denatured phenol resin (Milex RN made by MITSUI TOATSU CHEMICALS, INC.) | 70 | 0.5 |
| Example 11 | Flexibility given bismaleimide-triazine resin (BT 2112 made by Mitsubishi Gas Chemical Company, Inc.) | 65 | 0.5 |

Table 4

| | Coefficient of Friction | Wear depth ($\mu$ m) | Noise |
|---|---|---|---|
| Example 8 | 0.51 | 36 | Nil |
| Example 9 | 0.45 | 41 | Nil |
| Example 10 | 0.39 | 23 | Nil |
| Example 11 | 0.42 | 28 | Nil |

As clearly shown in Table 4, the ultrasonic motors using the friction materials made by combination of the aromatic polyamide fiber cloth and the rubber-like elastic body showed large friction coefficient, thereby obtaining large driving energy output. On the other hand, the wear amount of the friction material after one million times of rotation was very much small. And furthermore, neither undesirable noise in driving state and reduction of rotation speed were observed nor the deterioration of motor capabilities was made after one million times of rotation. Moreover, the wear amounts of the vibrating stators of each ultrasonic motors embodying the present invention were under several μm after one million times of rotation, the wear amount was very much small.

As mentioned above, the ultrasonic motors provided with the friction material made by infiltrating the rubber-like elastic body into the aromatic polyamide fiber cloth between the vibrating stator 2 and the object 3 showed large driving energy output power, and did not produce the noise. Moreover, the wear amount of the friction material was remarkably suppressed, and also wear of the vibrating stator was hardly observed. As aforementioned, the ultrasonic motor having stable motor capabilities without deterioration thereof can be obtained by the present invention.

C)      [Example using a composition made by scattering

11

the aromatic polyamide fiber into the flexibility given
bismaleimide-triazine resin]

1 weight part of pulp-like aromatic polyamide
fiber (Kevlar, made by Du. Pont Co., LTD.) cut into 2 mm
length was mixed with 9 weight parts of resin (BT 2112
made by MITSUBISHI GAS CHEMICAL CO. LTD.) made by adding
about 30 weight % of flexibility-giving agent to about 70
weight % of bismaleimide triazine.  Next, they were mixed
for ten minutes in a room temperature using a compression
kneader to scatter the discontinuous filament into a
matrix resin.  Then the mixture was performed into sheet-
shape, and thereafter, solvent contained in the resin was
removed by prewarming; and next, the resin was hardened by
heating for 2 hours in a compression molding apparatus on
the condition of 200 °C of temperature and 200 $kg/cm^2$ of
pressure, thereby obtaining 0.5 mm thickness of sheet-
shaped friction material (example 12).

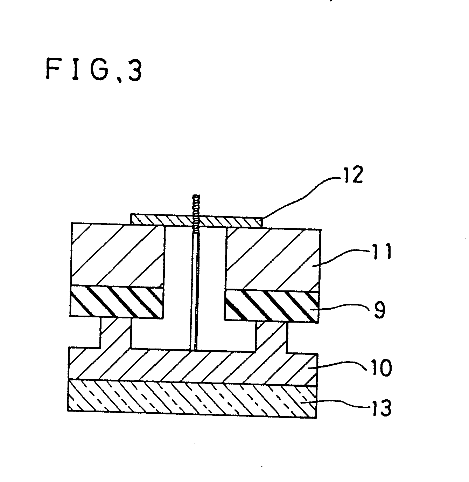

As shown in FIG.3, the sheet-shaped friction
material 9 was fixed between the vibrating stator 10
provided with the piezoelectric element 13 and the object
11 with a certain pressure by a nut 12, thereby to
complete the ultrasonic motors.  Results of the driving
test were shown in Table 5.

0222394

T a b l e   5

| | Static torque gf·cm) | Nonloaded rotation number (rpm) | Effi- ciency (%) | Wear depth after one million times of rotation ($\mu$ m) | Noise |
|---|---|---|---|---|---|
| Example 12 | 470 | 670 | 38 | 4.8 | Nil |
| Example 13 | 540 | 640 | 33 | 11 | Nil |
| Example 14 | 450 | 690 | 39 | 2.2 | Nil |
| Example 15 | 450 | 680 | 37 | 5.1 | Nil |
| Example 16 | 430 | 700 | 31 | 4.3 | Nil |
| Comparison example | 500 | 420 | 18 | 60 (*) | Considerably observed |

(*) After fifty thousand rotation

As shown in Table 5, in Example 12, the coefficient of friction was 0.60, which was considerably large in comparison with plastic materials which had the coefficient of friction 0.1-0.4, and therefore, large static torque was obtained.

In case of using the sheet-shaped friction material, efficiency of the ultrasonic motor was 38 % and was fairly high. This efficiency of the ultrasonic motor is defined by ratio of mechanical output power to electric input power. The wear amount was measured after one million rotation on the condition that the load was 300 gf·cm, and in step rotation of rotary angle 90°, apparent rotation number was 100 rpm. In example 12, fractuation

13

of the rotation number and the noise were not observed at all, and after one million rotation, the ultrasonic motor operates keeping the initial capabilities. Moreover, the wear amount was so small as only 4.8 μm after one million times of rotation.

For comparison, under the same condition as the example 12, the driving test was made with respect to an ultrasonic motor wherein a sheet-shaped material containing asbestos fiber, whose coefficient of friction was fairly large and was usually used as the lining material for the clutch was used as the friction material. Results of the comparison test was shown in Table 5. In the comparison example, the rotation stopped after only fifty thousand times of rotation, and the wear amount was so large as about 60 μm. The rotation velocity decreased with passage of time. The noise was large. As a result, it was found that the comparison ultrasonic motor did not stand for practical use.

Furthermore, the capabilities of the ultrasonic motor provided with a sheet-shaped elastic body (example 13) containing the aromatic polyamide fiber of 5 volume %, as well as, and also the capabilities of the ultrasonic motor provided with a sheet-shaped body (example 14) containing the aromatic polyamide fiber of 30 volume %, were measured, and the results are shown in Table 5.

The capabilities of the ultrasonic motor

14

provided with the sheet-shaped elastic body containing the aromatic polyamide fiber of 2 or smaller volume % was not preferable because the wear resistance was inferior.

On the other hand the sheet-shaped body containing the aromatic polyamide fiber of above 30-60 volume % was not preferable, because the scattering above 30 volume % of the aromatic polyamide fiber into the matrix resin was difficult. Therefore, the sheet-shaped elastic body which contains the aromatic polyamide fiber of 2-30 volume % is preferable. Moreover, capabilities of the ultrasonic motor provided with a sheet-shaped body containing the flexibility-giving agent of 10 weight % (example 15) and a sheet-shaped elastic body containing the flexibility-giving agent of 20 weight % (example 16) were shown in Table 5. As shown in Table 5, ultrasonic motors of the examples 13-16 showed the same sufficient motor capabilities as the example 12.

As mentioned above, by using the sheet-shaped elastic body mode by scattering the aromatic polyamide fiber into flexibility-given bismaleimide-triazine resin as the friction material, the ultraasonic motors having splended motor capabilities were obtained, which had large torque, splendid wear resistance, large stability in capabilities and long life time in the practical use, and further it did not produce the noise.

D)    [Embodiment using a composition made by

15

combining the aromatic polyamide fiber and mica to polyurethane elastomer]

<Example 17>

Pulp-shaped aromatic polyamide fiber (Kevler made by Du pont Co., LTD.) (fiber length, 3 mm) of 35 weight %, mica (Suzorite Mica made by KURARAY Co., LTD) having particle diameter of 20 μm of 20 weight % and polyurethane elastomer (TAKENATE made by Takeda Chemical Industries, Co., Ltd) of 45 weight % were mixed by using a compression kneader, thereby obtaining uniform mixture. Thereafter, the mixture was formed into sheet-shaped body having a thickness of 0.5 mm with application of heat and pressure.

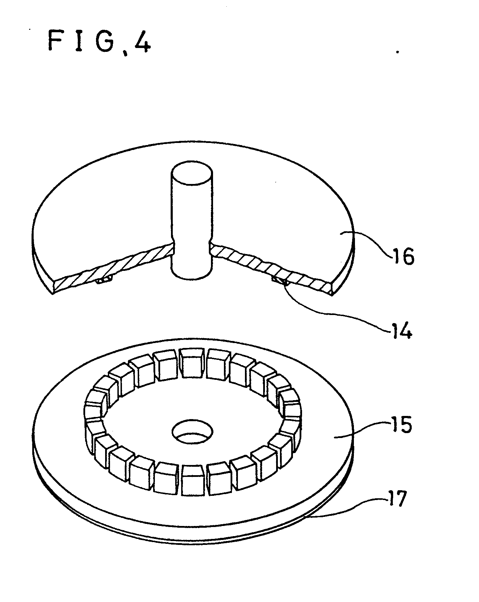

As shown in FIG.4, the sheet-shaped friction material 14 was provided between the steel vibrating stator 15 having the piezoelectric element 17 and the object 16 with a certain pressure by a spring (not shown in FIG.4), thereby obtaining the disc-type ultrasonic motor. It was driven on the condition that a load applied to the motor in the opposite direction to the rotation direction was 300 gf·cm, and in the step rotation of rotary angle 90°, the apparent rotation number was 200 rpm. The ultrasonic motor did not produce the noise and reduction of the rotating number with passage of the time. Furthermore, it showed stable motor capabilities after one million times rotation. The coefficient of friction

16

between the steel vibrating stator and the friction material was considerably large value as 0.65, and therefore, large torque and large nonloaded rotation number of 500 rpm were realized. The wear amount of sheet-shaped friction material after one million times of rotation was 7.5 µm and it was very much small. Changes of the static torque and nonloaded rotation number were hardly observed, and preferable motor capabilities were kept after one million rotation.

<Example 18>

Cut-fiber-type (fiber length 3 mm) aromatic polyamide fiber of 30 weight %, the mica having 20 µm of particle diameter of 10 weight % and the polyurethane elastomer of 60 weight % were kneaded using the compression kneader, thereby obtaining the uniform mixture. Thereafter the mixture was formed into sheet-shaped friction material having a thickness of 0.5 mm with application of heat and pressure.

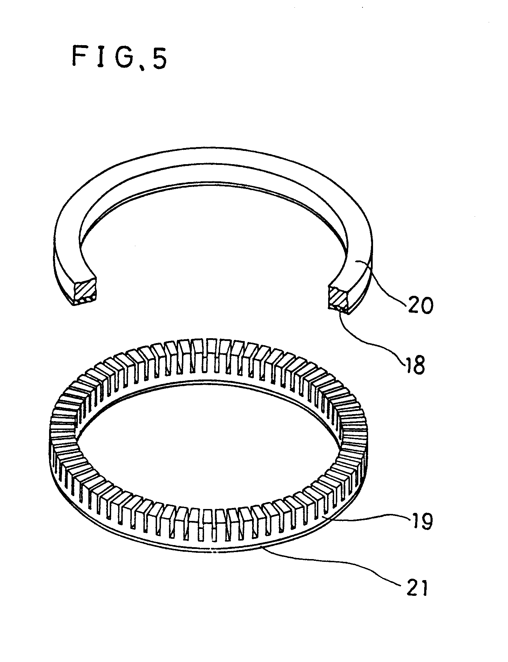

The sheet-shaped friction material 18 was provided between the steel vibrating stator 19 having the piezoelectric element 21 and the object 20 with a certain pressure from a magnetic force (not shown in FIG.5), thereby constituting the ring-type ultrasonic motor. It was made to drive on the condition that the load applied to the motor in the opposite direction against the rotation direction was 200 gf·cm and the rotation velocity

17

was 200 rpm. This ultrasonic motor did not produce the noise and the reduction of rotation number even after long lapse of time, and showed the stable motor capabilities after ten million rotation. Moreover, the coefficient of friction between the steal vibrating stator 19 and the sheet-shaped friction material 18 was 0.68 and was considerably large, and therefore, large static torque of 800 gf·cm and large nonloaded rotation number of 400 rpm were realized. The depth of the wear of sheet-shaped friction material after ten million times of rotation was 10 μm and the wear amount was very much small, and moreover, the changes of the static torque and the nonloaded rotation number were hardly observed and preferable motor capabilities were kept on after ten million rotation.

As mentioned above, by using the sheet-shaped body made by scattering of the aromatic polyamide fiber and the mica into the polyurethane elastomer as the friction material, the ultrasonic motors having splendid motor capabilities were obtained, which had large torque, splendid wear resistance, large stability in capabilities of motor and long life time in the practical use, and further it produces no noise.

Although the invention has been described in its preferred form with a certain degree of particularity, it is understood that the present disclosure of the preferred

18

form has been changed in the details of construction and the combination and arrangement of parts may be resorted to without departing from the spirit and the scope of the invention as hereinafter claimed.

WHAT IS CLAIMED IS

1.    Ultrasonic motor comprising

a vibrating stator(2) provided with a piezoelectric element(4) for producing travelling wave,

an object(3) to be driven by driving force based on said travelling wave, and

a friction material(1) containing at least rubber-like elastic body for transmitting said driving force from said vibrating stator(2) to said object(3), said friction material(1) being provided between said vibrating stator(2) and said object(3) in a manner to give enough contact therebetween, to transmit said driving force by friction force.

2.    Ultrasonic motor in accordance with claim 1 wherein;

said rubber-like elastic body is made of at least one member selected from the group consisting of natural rubber, synthetic rubber, rubber denatured thermosetting resin, flexibility-given thermosetting resin and thermoplastic elastomer.

3.    Ultrasonic motor in accordance with claim 2 wherein;

said synthetic rubber is polyurethane elastomer.

4.    Ultrasonic motor in accordance with claim 2 wherein;

said rubber denatured thermosetting resin is

20

rubber denatured phenol resin.

5.     Ultrasonic motor in accordance with claim 2 wherein;

said flexibility-given thermosetting resin is bismaleimide-triazine resin.

6.     Ultrasonic motor in accordance with claim 1 wherein;

said friction material contains aromatic polyamide fiber.

7.     Ultrasonic motor in accordance with claim 6 wherein;

said aromatic polyamide fiber is at least one member selected from the group consisting of woven fabric and non-woven fabric.

8.     Ultrasonic motor in accordance with claim 7 wherein;

said woven fabric is at least one member selected from the group consisting of plane fabric, diagonal-woven fabric and satin-woven fabric.

9.     Ultrasonic motor in accordance with claim 7 wherein;

said non-woven fabric is at least one member selected from the group consisting of felt-like body, pulp-like body and discontinuous filament.

10.     Ultrasonic motor in accordance with claim 6 wherein;

21

said aromatic polyamide fiber is poly-para-phenylene-terephthalamide fiber.

11. Ultrasonic motor in accordance with claim 1 wherein;

said friction material (1) is made by combination of said rubber-like elastic body and aromatic polyamide fiber.

12. Ultrasonic motor in accordance with claim 11 wherein;

said friction material (1) is made by scattering said aromatic polyamide fiber of 2-60 volume % into bismaleimide-triazine resin as said rubber-like elastic body.

13. Ultrasonic motor in accordance with claim 1 wherein;

said friction material (1) contains at least one member selected from the group consisting of inorganic filler and organic filler.

14. Ultrasonic motor in accordance with claim 13 wherein;

said inorganic filler is mica.

15. Ultrasonic motor in accordance with claim 1 wherein;

said friction material (1) is made by combination of aromatic polyamide fiber and inorganic filler.

22

16.     Ultrasonic motor in accordance with claim 15 wherein;

said friction material<sup>(1)</sup> is made by scattering said aromatic polyamide fiber of 10-60 weight % and mica of 5-30 weight % as said inorganic filler into polyurethane elastomer as said rubber-like elastic body.

FIG.1

FIG.2

FIG.3

FIG.4

FIG.5